(19) Europäisches Patentamt / European Patent Office / Office européen des brevets

(11) **EP 3 023 747 A1**

(12) **EUROPEAN PATENT APPLICATION**
published in accordance with Art. 153(4) EPC

(43) Date of publication:
**25.05.2016 Bulletin 2016/21**

(21) Application number: **13889464.7**

(22) Date of filing: **16.07.2013**

(51) Int Cl.:
**G01D 5/353** (2006.01)

(86) International application number:
**PCT/JP2013/069310**

(87) International publication number:
**WO 2015/008332 (22.01.2015 Gazette 2015/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Watanabe Co. Ltd.
Saitama-shi, Saitama 338-0835 (JP)**

(72) Inventor: **KOMATSU, Yasutoshi
Saitama-shi, Saitama 338-0835 (JP)**

(74) Representative: **Loyer & Abello
9, rue Anatole de la Forge
75017 Paris (FR)**

(54) **OPTICAL FIBER SENSING OPTICAL SYSTEM AND OPTICAL FIBER SENSING SYSTEM**

(57) An object is to provide an inexpensive optical fiber sensing system capable of performing measurement at a higher accuracy by preventing influence of external disturbance other than a physical quantity of a measurement object, particularly, variation of polarization. An optical fiber sensing optical system according to the present invention is configured to include a light source (5) which outputs search light having continuous wavelength components, a reflecting unit (71, 72, 73) which selects a portion of wavelength components among the continuous wavelength components to generate detection light, a wavelength discriminating unit (3) which the detection light is incident on and which generates transmitted light of which intensity is changed according to a change in wavelength thereof, a first light distributing unit (1) which irreversibly transmits the search light to the reflecting unit and transmits the detection light to an optical system including the wavelength discriminating unit, a second light distributing unit (2) which further divides the detection light transmitted from the first light distributing unit to the optical system including the wavelength discriminating unit into light to the wavelength discriminating unit and compensating light, and a delay unit (4) which generates a time difference between time points of extraction of the compensating light and the transmitted light to an outside.

FIG.1

**Description**

Technical Field

The present invention relates to an optical fiber sensing optical system and optical fiber sensing system used for measuring a physical quantity of a measurement object by using an optical fiber.

Background Art

In recent years, methods of using an optical fiber as a sensor for detecting, for example, fluctuations in the ground, malformation or distortion of structures have been proposed. As a representative method thereof, there is an FBG method where a diffraction grating FBG (Fiber Bragg Grating) formed in an optical fiber is used. The FBG is formed so that a predetermined period (grating period) is formed in a longitudinal direction of an optical fiber by refraction index modulation obtained by illuminating a specific core portion of the optical fiber with an interference pattern of ultraviolet laser light. The FBG reflects only the light having a specific wavelength complying with the grating period and passes the light having the other wavelengths. In the FBG method, a change in specific wavelength reflected according to a change of the grating period associated with a change of external environment is detected, so that the change of the external environment is detected.

In the FBG under the measurement environment, if a pressure is added from the outside or an ambient temperature is changed, the refraction index is changed, and thus, the wavelength of the reflected light is changed. By measuring a change in wavelength of the returning light, the fluctuation in the ground, a temperature of a liquid, a displacement or malformation of the structures, or the like can be detected.

For example, Patent Literature 1 discloses a technique of specifying existence, position, size, or the like of impact on a composite material by using an FBG at a good accuracy. In addition, Patent Literature 2 discloses a technique of measuring distortion of a measurement object by using an FBG.

A measurement system using an FBG is greatly influenced by variation factors other than the variation of the measurement object. As the variation factors, external disturbance other than a physical quantity of the measurement object such as ejection power of a light source, insertion loss of a fiber, variation of sensitivity of a light receiver, amplifier, or the like, optical energy loss (bending loss) due to bending of an optical fiber, optical energy loss (connector loss) due to a connector connecting optical fibers, gain variation of an electric circuit system, or the like influences the measurement of the physical quantity of the measurement object, so that there is a problem in that the measurement cannot be performed at a high accuracy.

Therefore, there is disclosed a technique where, in order to compensate for variation of intensity associated with the variation of the optical measurement system in the intensity of transmitted light of a wavelength filter for detecting variation of reflection wavelength from an FBG due to environment, reflected light from the filter is used as compensating light, and the intensity of the transmitted light is divided by the intensity of the reflected light. Here, the reflected light is used as the compensating light because the transmitted light and the reflected light are complementary to each other, so that detection sensitivity is improved. In addition, in order to prevent the reflected light from the filter from returning to the light source, a circulator of separating propagating wave and reflected wave in the optical fiber is used (Fig. 1 of Patent Literature 3).

However, the circulator in a sensing optical system using an FBG as an optical sensor is expensive. Therefore, there is disclosed a technique for cost down where light is incident on a filter in a tilt direction, so that the reflected light from the filter is spatially separated to be extracted (Fig. 20 of Patent Literature 3).

Cited List

Patent Literatures

Patent Literature 1: JP 2008-139171 A
Patent Literature 2: JP 2004-309218 A
Patent Literature 3: WO 0210/021362 A1

Summary of Invention

Technical Problem

However, it is recognized that there are problems in that the circulator and the filter have strong polarization dependency, variation in measured value occurs due to variation of polarization in the optical fiber, and deterioration in S/N of the measured value is caused from the use of the reflected light as the compensating light.

The present invention is made in view of the above problems, and an object thereof is to provide an inexpensive optical fiber sensing system capable of performing measurement at a higher accuracy by preventing influence of external disturbance other than a physical quantity of a measurement object, particularly, variation of polarization.

Solution to Problem

The above object is achieved by an optical fiber sensing optical system having the following configurations. The optical fiber sensing optical system according to a first aspect includes: a light source which outputs search light having continuous wavelength components; a reflecting unit which selects a portion of wavelength components among the continuous wavelength components to generate detection light; a wavelength discriminating unit which the detection light is incident on and which generates transmitted light of which intensity is changed according to a change in wavelength thereof; a first light distributing unit which irreversibly transmits the search light to the reflecting unit and transmits the detection light to an optical system including the wavelength discriminating unit; a second light distributing unit which further divides the detection light transmitted from the first light distributing unit to the optical system including the wavelength discriminating unit into light to the wavelength discriminating unit and compensating light; and a delay unit which generates a time difference between time points of extraction of the compensating light and the transmitted light to an outside.

Since the search light from the light source is irreversibly transmitted to the reflecting unit, it is possible to prevent the light source from being influenced by the reflected light. Since a specific wavelength among the continuous wavelengths is selected to be reflected by the reflecting unit which reflects the state of the measurement object, information on the state of the measurement object in the detection light can be obtained by specifying the wavelength reflected by the wavelength discriminating unit. The wavelength discriminating unit converts a difference in wavelength to the intensity of the transmitted light according to a difference in transmittance. However, the intensity of the transmitted light is also influenced by variation of characteristics of the light source and the optical fiber or the optical device which the light passes through. Therefore, as the compensating light having the information on the variation of the characteristics of the light source and the optical fiber or the optical device which the light passes through, not the reflected light having a high polarization dependency like the related art but the detection light from the FBG is extracted as it is, so that the polarization dependency is reduced in principle and, thus, a stable measurement system is provided.

With respect to the optical fiber sensing optical system according to a second aspect, in the optical fiber sensing optical system according to the first aspect, preferably, an optical axis of the detection light which is incident on the wavelength discriminating unit is substantially perpendicular to an interface of an incident side of the wavelength discriminating unit.

Although the reflectance and the transmittance of the light are different between a polarization component (S-polarization) perpendicular to an incident plane and a polarization component (P-polarization) parallel to the incident plane, in the case where the incident angle to the interface is 0, the incident light is perpendicular to the interface of the incident side, the reflectance and the transmittance of the S-polarization and the reflectance and the transmittance of the P-polarization are the same, the polarization dependency disappears.

With respect to the optical fiber sensing optical system according to a third aspect, in the optical fiber sensing optical system according to the first or second aspect, preferably, optical power transmission among the light source, the reflecting unit, the first light distributing unit, the second light distributing unit, and the wavelength discriminating unit is performed by a single mode optical fiber, and the delay unit is configured with a single mode optical fiber. It is preferable that the first light distributing unit includes an 11th port which the search light is input to, a 12th port which outputs the search light input to the 11th port and which the detection light is input to, and a 13th port which outputs the detection light input to the 12th port, and the second light distributing unit includes a 21st port which the detection light output from the 13th port is input to, a 22nd port which outputs the detection light to the wavelength discriminating unit, and a 23rd port which outputs the detection light as the compensating light to an outside.

The optical fiber sensing optical system according to the present invention is configured to include optical devices and a single mode fiber connecting the optical device. By using the single mode fiber, it is possible to avoid a problem of mode variation caused from a multimode fiber or a problem of reflection process on the interface. The first light distributing unit transmits the search light input to the 11th port to the 12th port, and the light is transmitted to the FBG through the single mode fiber. The detection light from the FBG is transmitted from the 12th port to the 13th port.

In addition, the detection light from the 13th port is input to the 21st port of the second light distributing unit to be transmitted to the 22nd port connected to the wavelength discriminating unit and the 23rd port which outputs the detection light to an outside. The 22nd port and the 23rd port are connected to single mode fibers, and thus, the detection light beams thereof are directly or indirectly guided to the wavelength discriminating unit and the outside.

With respect to the optical fiber sensing optical system according to a fourth aspect, in the optical fiber sensing optical system according to the third aspect, it is preferable that the first light distributing unit is a circulator which transmits optical power from the 11th port to the 12th port and transmits optical power from the 12th port to the 13th port, and the second light distributing unit is a coupler which divides the optical power input to the 21st port into the 22nd port and the 23rd port.

In the optical fiber sensing optical system according to the present invention, the circulator is used for the first light distributing unit, so that it is possible to prevent the detection light from the FBG from returning to the light source and forming laser oscillation. In addition, the coupler is used for the second light distributing unit, so that it is possible to reduce cost.

With respect to the optical fiber sensing optical system according to a fifth aspect, in optical fiber sensing optical system according to the third aspect, it is preferable that the first light distributing unit is configured with an optical isolator which is forward from the light source to the FBG and a coupler which splits light from the 12th port into the 13th port and the 11th port, and the second light distributing unit is a coupler which divides the optical power input to the 21st port into the 22nd port and the 23rd port.

In the optical fiber sensing optical system according to the present invention, not a circulator but the optical isolator and the coupler are used in the splitting unit, so that it is possible to prevent laser oscillation of the light source and to reduce cost.

With respect to the optical fiber sensing optical system according to a sixth aspect, in the optical fiber sensing optical system according to any of the third to fifth aspects, preferably, a plurality of the reflecting units is installed, and the reflecting units are connected to each other by an optical fiber having a predetermined length.

In the optical fiber sensing optical system according to the present invention, the plurality of the reflecting units is connected, so that it is possible to measure a plurality of of physical quantities.

With respect to the optical fiber sensing system according to a seventh aspect, it is preferable that the optical fiber sensing system includes: one light receiver which performs light reception in a state where there is a difference in time point of extraction between the compensating light and the detection light output from the optical fiber sensing optical system according to any one of the first to sixth aspects; and a calculation unit which calculates a ratio of intensity of the transmitted light to the compensating light according to output of the light receiver.

In the optical fiber sensing system according to the present invention, one light receiver performs light reception in a state where there is difference in time point of extraction between the transmitted light and the detection light, irregularity of a light receiving system is hardly received.

With respect to the optical fiber sensing optical system according to an eighth aspect, in the optical fiber sensing optical system according to the seventh aspect, preferably, the light source is driven based on a pseudo-random number, and the output is signal-processed by a correlator.

In the optical fiber sensing system according to the present invention, since the light source is driven based on a pseudo-random number and the output from the light receiver is processed by the correlator, sharp pulse is generated at the time point where correlation is performed, and the magnitude thereof is proportional to the light input to the light receiver. By taking a ratio of the transmitted light and the compensating light, net level variation of the transmitted light where the variation of the optical fiber sensing optical system including the variation in polarization is compensated for is recognized, and variation in wavelength corresponding to a physical state of the measurement object can be recognized.

Advantageous Effects of Invention

According to the present invention, an output from an optical fiber sensing optical system is not easily influenced by variation in polarization during light propagation, so that it is possible to provide an optical fiber sensing optical system which is capable of performing measurement at a high accuracy and of which cost is reduced and an optical fiber sensing system using the optical fiber sensing optical system.

Brief Description of Drawings

Fig. 1 is a diagram illustrating a whole configuration of an optical fiber sensing system according to a first embodiment.
Fig. 2 is a diagram illustrating a whole configuration of an optical fiber sensing system according to a second embodiment.

Fig. 3 is a diagram illustrating emission spectrum of a broadband light source 5.

Fig. 4 is a diagram illustrating a change of reflection wavelength of FBG with respect to temperature.

Fig. 5 is an explanatory diagram of reflection and transmission characteristics of a filter.

Fig. 6 is an explanatory diagram of a measurement system of polarization dependent loss of a filter.

Figs. 7(A) and 7(B) are diagrams illustrating (A) a measured value of a 2-port filter and (B) a measured value of a 3-port filter when there is a change in polarization.

Description of Embodiments

Here, embodiments for embodying the invention (hereinafter, simply referred to as "the present invention") according to the Claims will be described with reference to the drawings.

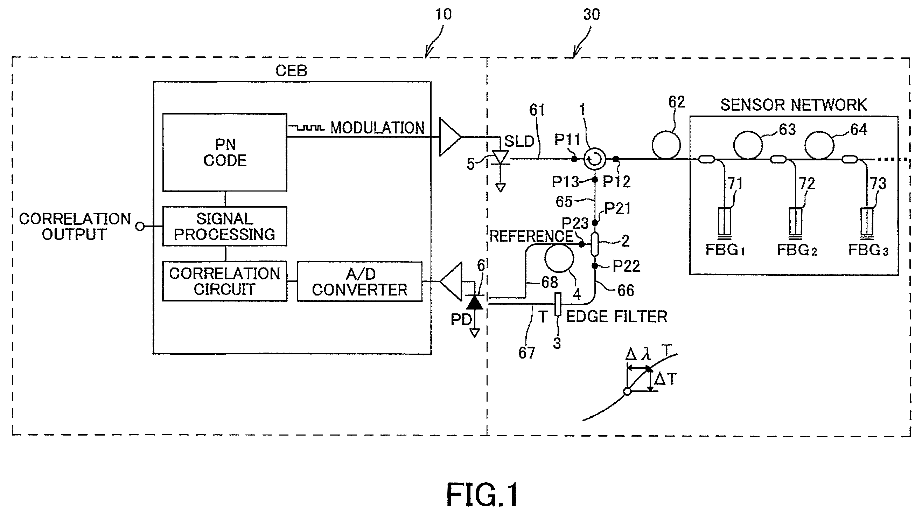

First, a first embodiment of the present invention will be described with reference to the drawings. Fig. 1 is a diagram illustrating a whole configuration of an optical fiber sensing system according to the first embodiment. As illustrated in Fig. 1, the optical fiber sensing system is configured to include an electrical measurement system 10 and an optical fiber sensing optical system 30 connected thereto.

The optical fiber sensing optical system is configured to include a light source, FBGs which are reflecting units having a reflection wavelength changing according to variation of measurement environment, an edge filter which is a wavelength discriminating unit discriminating a selected wavelength, a delay unit which provides a time difference between transmitted light from the wavelength discriminating unit and compensating light compensating for the transmitted light, and optical parts combining these components cooperatively. Actual combination is implemented by optical power transmission using a single mode optical fiber.

The reflecting units are an FBG1 through an optical coupler connected to an optical fiber 62, an FBG2 through an optical coupler connected to an optical fiber 63, and an FBG3 through an optical coupler connected to an optical fiber 64. Appropriate distances are provided among installation sites of the FBGs, so that reflected light beams from the FBGs can be separated in terms of time.

The electrical measurement system 10 is configured to include a PN code generator, a light source driver, a PD (photodiode) 6, a preamplifier, an A/D converter, a correlation circuit, a signal processor, and the like. The optical fiber sensing system is configured by combining the electrical measurement system and the optical fiber sensing optical system including optical fibers 61, 65, 66, 67, and 68, a circulator 1, an optical coupler (optical coupler, optical splitter) 2, an edge filter 3, and a dummy fiber 4.

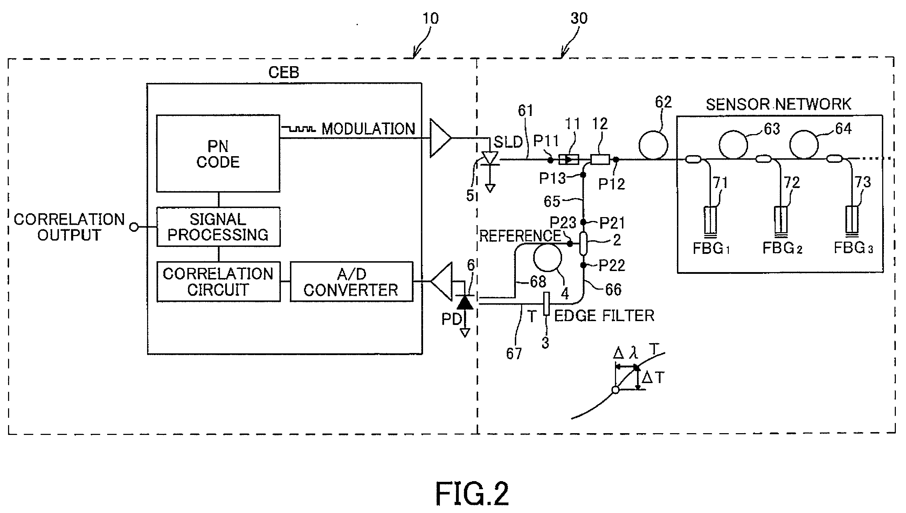

Here, the circulator 1 is a first light distributing unit and includes an 11th port, a 12th port, and a 13th port. The optical coupler 2 is a second light distributing unit and includes a 21st port, a 22nd port, and a 23rd port. In addition, the edge filter is a filter having a tilt characteristic where a change in wavelength is in correspondence with a change in transmittance and becomes a wavelength discriminating unit. The circulator 1 is used so as for the reflected light not to return from the optical measurement system to the light source, and the direction from the light source to the FBGs is the forward direction. As an inexpensive configuration for allowing light not to return to the light source, as illustrated in Fig. 2, a combination of the isolator 11 and the optical coupler 12 may be used. In the isolator 11, the forward direction is the direction from the light source to the FBGs, and due to this configuration, the light returning to the light source is greatly decreased.

The PN code generator generates an M-sequence pseudo-random code (hereinafter, referred to as a pseudo-random code) having a code length N at a predetermined chip rate and transmits a pseudo-random signal to the light source driver and a signal processing circuit of a correlator.

As the code length of a pseudo-random code is enlarged, occurrence probabilities of 0 and 1 become equal to each other, so that a code having a high accuracy can be generated. In addition, since a peak value of the light entering the optical fiber becomes high, the returning light (for example, Rayleigh scattering) having a small reflection level can be measured at a high accuracy. For example, if a reflection gain of Rayleigh scattering is set to -60 dB, the high-accuracy measurement can be implemented by setting the code length to be $N = 2^{21} - 1$ (corresponding to a gain of 63 dB) or more.

In the embodiment, the M-sequence pseudo-random code is used, but the present invention is not limited thereto. For example, a Gold-sequence pseudo-random code or others may be used. In addition, a pseudo-random code generated by sampling white noise may be used.

The light source driver is driven by the pseudo-random signal from the PN code generator and performs PN modulation on light emitted from a broadband light source 5 based on the pseudo-random signal from the PN code generator (hereinafter, the modulated light is referred to as search light) and the search light is guided into the optical fiber 61.

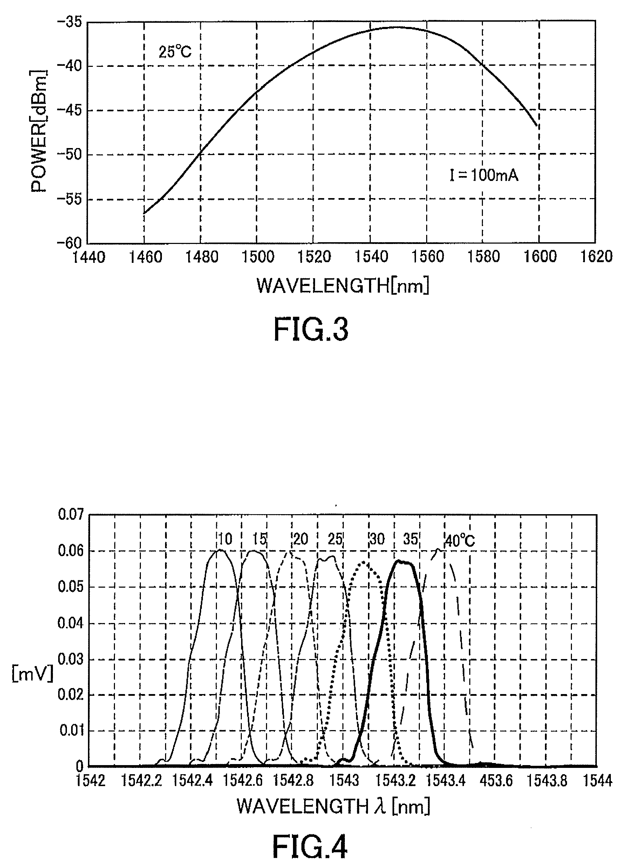

Here, as the broadband light source 5 having continuous wavelength components, a high-power superluminescent diode (SLD) which can be simply used in comparison with an ASE light source using a fiber is preferred. In addition, in the case where the dynamic range of measurement is narrow, a combination of a light emitting diode and a multimode fiber having a large core diameter may be used. In this case, as the broadband light source 5, an SLD having an emission spectrum illustrated in Fig. 3 at a temperature of 25°C illustrated in Fig. 3, being capable of high-speed modulation, and having a continuous spectrum including a change range of shift of wavelengths of the FBG1 to the FBG3 is used.

The circulator 1 has three input/output ports and has an irreversible transmission characteristic. Namely, the light incident on the first port (P11) is output from the second port (P12), and the light incident on the second port (P12) is output from the third port (P13). However, the light from the second port (P12) toward the first port (P11), the light from the third port (P13) toward the second port (P12) and the first port (P11), and the light from first port (P11) toward the third port (P13) are blocked but not transmitted.

The circulator 1 outputs the light incident from the optical fiber 61 to a through main line 62 and outputs the reflected light incident from the through main line 62 on the circulator 1 to the optical fiber 65. In addition, the optical coupler 2 outputs the light incident from the optical fiber 65 through the optical fiber 66 and the dummy fiber 4 to the optical fiber 68.

The search light guided into the optical fiber 61 passes through the through main line 62 and is split by the optical coupler to be incident on the FBG1, the FBG2, and the FBG3. The FBG1, the FBG2, and the FBG3 reflect the light having a wavelength according to a physical quantity of a measurement object.

The edge filter 3 changes the intensity of the transmitted light according to the wavelength of the returning light from the FBG1, the FBG2, and the FBG3. As the edge filter 3, a band pass filter, an edge filter, or the like where a dielectric multi-layered film filter is vapor-deposited on end surfaces of the optical fiber is preferably used.

In the configuration of the second embodiment illustrated in Fig. 2, the search light which is incident on the P11 as the inlet of the isolator 11 is incident on the optical fiber 62 to be transmitted to the FBGs. In addition, the light which is reflected by the FBG and is incident on the P12 is split into the P11 side and the P13. The light split into the P11 side is blocked by the isolator 11, so that the light to the light source 5 is greatly decreased. In the configuration of Fig. 2, since the power of the reflected light from the FBGs are divided by using the isolator and the optical coupler instead of the circulator, detection sensitivity is lowered, but the configuration is advantageous in terms of cost.

The FBG1, the FBG2, and the FBG3 are Fiber Bragg Gratings and are installed at a distance which is much longer than distance resolution of the electrical measurement system 10. In this manner, the light beams having the same energy are set to be distributed over the FBG1, the FBG2, and the FBG3. The FBG1, the FBG2, and the FBG3 reflect the light having a wavelength of $\lambda_0$ as the detection light in the case where there is no change in physical quantity of the measurement object. In the case where there is a change in physical quantity of the measurement object, the wavelength of the detection light is shifted according to the change in physical quantity of the measurement object.

Here, the installation interval among the FBG1, the FBG2, and the FBG3 may be four times or more of the distance resolution defined by the chip rate of the PN code generator 20. The time difference of the reflected light among the FBGs becomes a time difference taken to reciprocate the distance between the FBGs. The distance resolution is calculated approximately by the following equation.

$$\text{Distance Resolution } \Delta L = 100/fc \ (m)$$

(Here, fc is a chip rate of the PN code generator 20 and its unit is MHz)

For example, in the case where the chip rate is 10 MHz, the ΔLF becomes 10 m. Therefore, if each installation interval among the BG1, the BG2 and the BG3 is 40 m or more, the time difference between the reflected light beams from the FBGs is 80 minutes or more for reciprocation. Preferably, the distance between the FBGs is much longer than the length of the dummy fiber described later so as for the detection light and the compensating light not to be mixed in the optical detector.

For example, the case of measuring the temperature of the measurement environment will be described. As the FBG1, the FBG2, and the FBG3, FBGs having a temperature characteristic illustrated in Fig. 4 are used. Fig. 4 is a diagram illustrating a change in wavelength of returning light with respect to temperature. The horizontal axis represents wavelength (nm), and the vertical axis represents reflection gain (mV) to incident light.

If the temperature of the environment where the FBG is installed is changed, the wavelength of the reflected light is changed as illustrated in Fig. 4. In the light source, since the emission spectrum of the SLD illustrated in Fig. 3 is almost flat, in the area where the reflection wavelength of the FBG is changed, the level of the reflected light is almost constant.

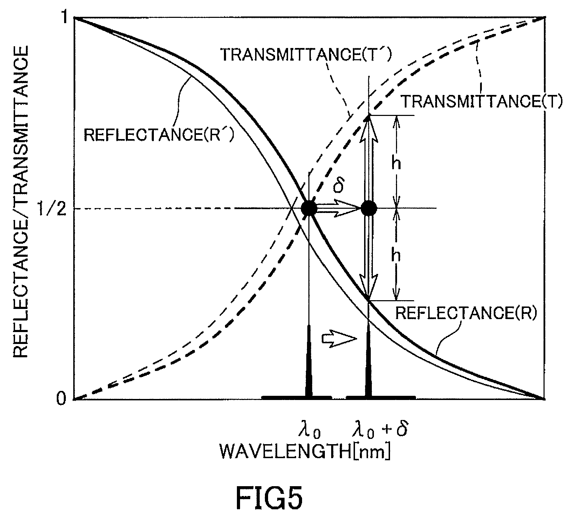

If the reflected light from the FBG of which wavelength is changed is incident on the edge filter (wavelength discriminating unit) having transmission and reflection characteristics illustrated in Fig. 5, the change in wavelength of the reflected light from the FBG can be detected as a change in intensity of the transmitted light.

Although the temperature of the measurement environment can be measured by the above-described configuration, there is a problem in that residual noise cannot be taken in actual measurement. In particular, it is found out that the residual noise is increased in the optical system of which cost is reduced without using an expensive circulator, in which the edge filter of tilt incidence is used in a portion of the optical coupler 2, so that the transmitted light and the reflected light are spatially separated.

Fig. 5 is a diagram illustrating transmittance (T) indicated by dotted lines and reflectance (R) indicated by solid lines with respect to the wavelength of the light incident on the edge filter 3. As illustrated in this figure, in the case where the wavelength of the light is $\lambda_0$, the reflectance and the transmittance are set to be equal to each other, and if a loss of a filter is ignored, the transmittance and the reflectance are complementarily changed so that the sum of the transmittance and the reflectance is always 1. In the case were the wavelength of the light incident on the edge filter 3 is $\lambda_0$, since the reflectance and the transmittance become equal to each other as described above, the levels (dotted lines) of the transmitted light beams become equal to each other, and the levels (solid lines) of the reflected light beams become equal to each other, as illustrated in Fig. 5.

On the other hand, in the case where the wavelength of the returning light is shifted due to a change in physical quantity of the measurement object, for example, in the case where the wavelength is changed to $\lambda_0 + \Delta\lambda$, as illustrated in Fig. 5, the transmittance is increased by h, and the reflectance is complementarily decreased by h. As a result in Fig. 4, the level of the transmitted light is increased, and the level of the reflected light is decreased.

Therefore, if the reflected light from the edge filter is used as the compensating light compensating for the variation factor of the measurement system, the sensitivity of the wavelength discrimination can be increased two times. However, it can be understood that, as described later, the use of the reflected light from the edge filter as the compensating light causes severe problem due to a variation of the polarization of the measurement system. Therefore, in this case, as the compensating light, not the reflected light from the edge filter but the reflected light (detection light) from the FBG is used.

In the case where the transmitted light and the compensating light of the edge filter are intended to be received by the same optical detector to be separated, there is a need for a time difference to be provided between the transmitted light and the compensating light. The dummy fiber 4 as a delay line provides an optical path difference which is four times or more of the distance resolution of the electrical measurement system 10 between the detection light and the transmitted light separated by the optical coupler 2.

Here, the length of the dummy fiber 4 may be four times or more of the distance resolution defined by the chip rate of the PN code generator. The distance resolution $\Delta L$ is calculated by the following equation.

$$\Delta L = 100/fc \ (m)$$

(Here, fc is the chip rate of the PN code generator 20) For example, in the case where the chip rate is 10 MHz, since the $\Delta L$ is 10 m, the length of the dummy fiber 4 may be 40 m or more.

In addition, although the dummy fiber 4 is installed in the optical fiber 68 in the embodiment, the dummy fiber 4 may be installed in the optical fiber 66 or the optical fiber 67. The optical coupler 2 divides the detection light from the optical fiber 65 into the compensating light and the light directed toward the edge filter. The PD 6 is configured with photodiodes and receives the transmitted light and the compensating light at different time points according to the optical path difference provided between the transmitted light and the compensating light.

The preamplifier amplifies the transmitted light and the compensating light received by the PD 6. The A/D converter converts analog voltages of the transmitted light and the compensating light amplified by the preamplifier to digital signals.

The correlation circuit obtains correlation between the electric signal from the A/D converter and the pseudo-random code from the PN code generator to calculate gains with respect to the physical measurement light according to the intensities of the transmitted light and the compensating light. This becomes a calculation unit calculating a ratio thereof.

In the signal processing, the intensity ratio (transmitted light/compensating light) is obtained from the gain at the peak of the transmitted light calculated by the correlation circuit and the gain at the peak of the compensating light, and a wavelength shift is calculated from the ratio, so that information on the physical quantity of the measurement object is detected.

Next, a measurement method for the physical quantity of the measurement object by the optical fiber sensing system will be described. First, if the pseudo-random code is generated by the PN code generator, the light source driver is driven by the code, the PN modulation is performed on the light output from the broadband light source 5, and the search light is guided from the broadband light source 5 into the optical fiber 61.

The search light guided into the optical fiber 61 passes through the through main line 62 and is split by the optical coupler to be incident on the FBG1, the FBG2, and the FBG3. The FBG1, the FBG2, and the FBG3 reflect the light having a wavelength according to the physical quantity of the measurement object.

The light beams from the FBG1, the FBG2, and the FBG3 are incident on the electrical measurement system 10 with time differences according to the installation intervals. First, the returning light from the FBG1 installed closest to the electrical measurement system 10 is incident on the circulator 1 to be output to the optical fiber 65.

The detection light output to the optical fiber 65 is incident on the optical coupler 2 to be output to the optical fiber 66. The light output to the optical fiber 66 is incident on the edge filter 3 to be divided into the transmitted light and the reflected light of which intensities are complementarily changed according to the wavelength.

The transmitted light passes through the optical fiber 67 to be received by the PD 6. In addition, the detection light from the FBG is incident through the optical fiber 65 on the coupler 2, and a portion of the light is output as the compensating light to the optical fiber 68 and is applied with the optical path difference which is equal to or larger than the distance resolution of the electrical measurement system 10 by the dummy fiber 4. After that, the resulting light is received by the optical detector PD 6.

Next, the transmitted light and the compensating light are amplified by the preamplifier, and after that, the transmitted light and the compensating light are converted to electric signals by the A/D converter to be transmitted to the correlation circuit.

The correlation circuit obtains correlation of the electric signals from the A/D converter with respect to the pseudo-random code transmitted from the PN code generator and calculates the gains of the compensating light and the transmitted light, and the signal processing is performed.

In the signal processing, a level difference between the gain at the peak of the transmitted light and the gain at the peak of the compensating light is obtained. Hereinafter, the wavelength shift is calculated based on the level difference, and the physical quantity of the measurement object is calculated from the shift amount. In addition, the detection light beams from the FBG2 and the FBG3 are processed in the same manner as described above, and in each case, the physical quantity of the measurement object is detected.

(Method of Calculating Wavelength Shift)

Next, a method of calculating the wavelength shift amount from the level difference will be described with reference to Fig. 5. In Fig. 5, the horizontal axis represents wavelength (nm), and the vertical axis represents transmittance (dB) and reflectance (dB). In Fig. 5, a difference of the wavelength from central wavelength $\lambda_0$ is represented by $\delta$.

The dotted line represents transmittance of the light incident on the edge filter 3 with respect to the wavelength, and if the normalization is performed, the transmittance is approximately expressed by the following equation.

[Mathematical Formula 1]

$$t(\lambda) = \frac{1}{2} + a(\lambda - \lambda_0)$$

The solid line represents reflectance of the light incident on the edge filter 3 with respect to the wavelength, and if the normalization is performed, the reflectance is approximately expressed by the following equation.

[Mathematical Formula 2]

$$r(\lambda) = \frac{1}{2} - a(\lambda - \lambda_0)$$

The transmittance and the reflectance are complementarily changed. If the one is increased, the other is decreased. The sum of the transmittance and the reflectance is always 1 as expressed by the following equation.

Here, the ratio between the transmittance and the reflectance is expressed by the following equation.

[Mathematical Formula 3]

$$\zeta(\lambda) = \frac{t(\lambda)}{r(\lambda)} = \frac{1 + 2a(\lambda - \lambda_0)}{1 - 2a(\lambda - \lambda_0)}$$

Here, the physical quantity of the measurement object is changed, and thus, the wavelength of the light which is reflected by the FBG is shifted by $\Delta\lambda$. In the case where the wavelength is changed into $\lambda = \lambda 0 + \delta = \lambda 0 + \Delta\lambda$, the ratio between the transmittance and the reflectance is expressed by the following equation based on the above equation.

[Mathematical Formula 4]

$$\zeta(\lambda_0 + \Delta\lambda) = \frac{1 + 2a\Delta\lambda}{1 - 2a\Delta\lambda}$$

The wavelength shift amount $\Delta\lambda$ is expressed by the following equation based on the above equation.

[Mathematical Formula 5]

$$\Delta\lambda = \frac{1}{2a} \cdot \frac{\zeta(\lambda_0 + \Delta\lambda) - 1}{\zeta(\lambda_0 + \Delta\lambda) + 1}$$

In this manner, the returning light from the FBG can be divided into the reflected light and the transmitted light with the reflectance and the transmittance according to the wavelength by the edge filter 3, and the wavelength shift can be calculated from the ratio of the levels of the two light beams.

In the related art, as described above, by using both of the reflected light and the transmitted light of the edge filter, the influence of the wavelength change on the change of the light receiving power is efficiently extracted. However, it is found out that, in an actual measurement system, the residual noise prevents the improvement of the measurement sensitivity as well as the intensity change associated with the wavelength change. As a counter measure, there is a method of using the detection light from the FBG as the compensating light without a filter instead of the reflected light from the edge filter.

The variation of the transmittance and the reflectance associated with the variation of polarization can be treated as the variation from the transmittance and reflectance characteristics in the case of vertical incidence. Equivalently, it may be considered that the characteristics of the filter are changed like the transmittance (T') indicated by the thin solid line of Fig. 5 and the reflectance (R') indicated by the thin dotted line. On the contrary, according to the characteristics of the thick broken line and the thick solid line in the case of the vertical incidence, it may be considered that the wavelength of the detection light is varied. Here, if the pseudo variation of the wavelength associated with the variation of the polarization is expressed by $\Delta\lambda_p$, $\delta = \Delta\lambda_p$. In the case where the reflected light from the wavelength discriminating unit is used as the compensating light, the power $\delta(\lambda_0 + \Delta\lambda_p)$ obtained is expressed by the following equation based on Mathematical Formula 4.

[Mathematical Formula 6]

$$\zeta(\lambda_0 + \Delta\lambda_P) = \frac{1 + 2a\Delta\lambda_P}{1 - 2a\Delta\lambda_P}$$

In the noise component from the polarization, since the reflected light is complimentary to the transmitted light, the sensitivity is increased even in the case where the polarization is varied. Therefore, the sensitivity is easily influenced by the noise component associated with the variation of the polarization. Namely, since the detection sensitivity is increased, the method of using the reflected light from the wavelength discriminating unit as the compensating light in the related art has a shortcoming in that the sensitivity is high with respect to the noise. Therefore, as a counter measure, there is a method of using not the reflected light but the detection light as the compensating light, and thus, in Mathematical Formula 6, the denominator becomes constant. Therefore, the sensitivity with respect to the variation of the polarization is decreased, so that the S/N is improved.

As a reason for the residual noise, is considered the variation of the polarization when the search light and the detection light pass through optical devices including the optical fibers. In particular, the characteristics of the edge filter are easily influenced by the variation of the polarization. Therefore, the characteristics of the edge filter with respect to the variation of the polarization which is considered to cause the noise were tested.

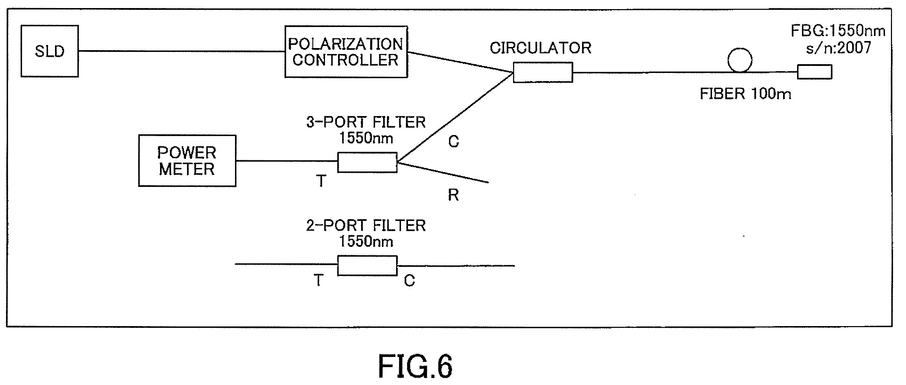

A measurement system is illustrated in Fig. 6. The measurement system is configured so as to comply with the embodiment. The optical power from an SLD of a light source is connected to an FBG through a polarization controller controlling a polarization wave through a circulator and an optical fiber having a length of 100 m. The reflected light from the FBG is input through the circulator to the optical filter.

A measurement object is a filter which is considered to cause the variation of the polarization which becomes a cause of the noise. Since the sum of the power of the transmitted light of the filter and the power of the reflected light may be assumed to be constant, the polarization dependency of the transmitted light becomes the reverse polarization dependency of the reflected light.

A 3-port filter as the measurement object is configured to include a collimator-series optical system which collimates light from the fiber in the body portion to form a parallel beam and an interference filter where the optical axis of the incident light is tilt by a predetermined angle from the perpendicular direction of the incident-side interface of the filter. The light incident with a predetermined angle with respect to the incident-side interface of the interference filter is reflected with a predetermined angle at the opposite side and transmitted toward the rear surface.

On the other hand, in a 2-port filter, light from the outside is substantially perpendicular to the incident-side interface of the filter. Both of the 2-port filter and the 3-port filter have respective pigtails for connecting the internal optical system to the outside optical fiber.

Since the polarization wave transmitting through a single mode optical fiber is not conserved, the polarization plane is varied due to external disturbance. If the polarization plane is varied in a time unit longer than a time constant of the measurement system, the measured value may be changed during the measurement.

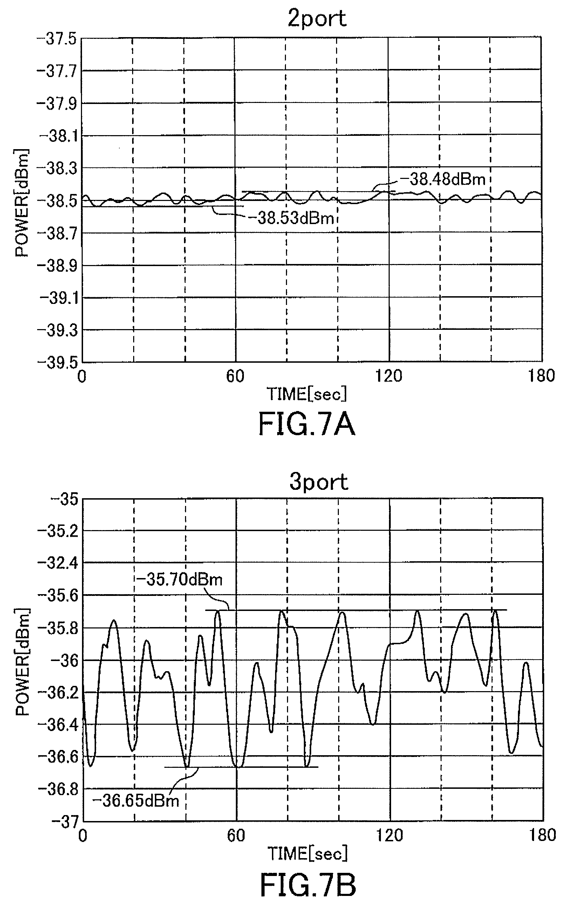

Figs. 7(A) and 7(B) illustrate comparison of variation in intensity of the transmitted light between the 2-port filter and the 3-port filter in the case close to the actual measurement system. In the 2-port filter of Fig. 7(A), the amplitude of the power variation is 0.05 dBm. In the 3-port filter of Fig. 7(B), the width of the variation in intensity of the transmitted light is 0.95 dBm. Therefore, there is a difference of about 1 dBm.

Namely, the reflected light from the FBG is incident to be perpendicular to the edge filter, and not the reflected light from the edge filter but the reflected light from the FBG is used as the compensating light, so that the sensitivity of the measurement system can be improved greatly.

Industrial Applicability

According to the present invention, in comparison with a method of the related art, noise associated with variation of polarization is reduced, so that it is possible to provide an optical fiber sensing optical system and an optical fiber sensing system capable of performing measurement with much higher sensitivity.

Reference Sign List

1: Circulator
2: Optical coupler (optical coupler, optical splitter)
3: Edge filter: wavelength discriminating unit
4: Dummy fiber: delay unit
5, SLD: light source
6, PD: light receiver
10: Electrical measurement system
30: Optical measurement system (optical fiber sensing optical system)
61 to 68: Optical fiber
71: FBG1
72: FBG2
73: FBG3

**Claims**

1. An optical fiber sensing optical system comprising:

   a light source which outputs search light having continuous wavelength components;
   a reflecting unit which selects a portion of wavelength components among the continuous wavelength components to generate detection light;
   a wavelength discriminating unit which the detection light is incident on and which generates transmitted light of which intensity is changed according to a change in wavelength thereof;
   a first light distributing unit which irreversibly transmits the search light to the reflecting unit and transmits the detection light to an optical system including the wavelength discriminating unit;
   a second light distributing unit which further divides the detection light transmitted from the first light distributing unit to the optical system including the wavelength discriminating unit into light to the wavelength discriminating unit and compensating light; and
   a delay unit which generates a time difference between time points of extraction of the compensating light and the transmitted light to an outside.

2. The optical fiber sensing optical system according to claim 1, wherein an optical axis of the detection light which is incident on the wavelength discriminating unit is substantially perpendicular to an interface of an incident side of the wavelength discriminating unit.

3. The optical fiber sensing optical system according to claim 1 or 2, wherein
   optical power transmission among the light source, the reflecting unit, the first light distributing unit, the second light distributing unit, and the wavelength discriminating unit is performed by a single mode optical fiber, and the delay unit is configured with a single mode optical fiber,
   the first light distributing unit includes an 11th port which the search light is input to, a 12th port which outputs the search light input to the 11th port and which the detection light is input to, and a 13th port which outputs the detection light input to the 12th port, and
   the second light distributing unit includes a 21st port which the detection light output from the 13th port is input to, a 22nd port which outputs the detection light to the wavelength discriminating unit, and a 23rd port which outputs the detection light as the compensating light to an outside.

4. The optical fiber sensing optical system according to claim 3, wherein
   the first light distributing unit is a circulator which transmits optical power from the 11th port to the 12th port and transmits optical power from the 12th port to the 13th port, and
   the second light distributing unit is a coupler which divides the optical power input to the 21st port into the 22nd port and the 23rd port.

5. The optical fiber sensing optical system according to claim 3, wherein
   the first light distributing unit is configured with an optical isolator which is forward from the light source to the FBG and a coupler which splits light from the 12th port into the 13th port and the 11th port, and
   the second light distributing unit is a coupler which divides the optical power input to the 21st port into the 22nd port and the 23rd port.

6. The optical fiber sensing optical system according to any of claims 3 to 5, wherein
   a plurality of the reflecting units is installed, and the reflecting units are connected to each other by an optical fiber having a predetermined length.

7. An optical fiber sensing system comprising:

   one light receiver which performs light reception in a state where there is a difference in time point of extraction between the compensating light and the detection light output from the optical fiber sensing optical system according to any of claims 1 to 6; and
   a calculation unit which calculates a ratio of intensity of the transmitted light to the compensating light according to output of the light receiver.

8. The optical fiber sensing system according to claim 7, wherein the light source is driven based on a pseudo-random number, and the output is signal-processed by a correlator.

FIG.1

EP 3 023 747 A1

FIG.2

EP 3 023 747 A1

FIG.3

FIG.4

FIG5

FIG.6

EP 3 023 747 A1

## 2port

**FIG.7A**

## 3port

**FIG.7B**

## INTERNATIONAL SEARCH REPORT

| International application No. |
| --- |
| PCT/JP2013/069310 |

**A. CLASSIFICATION OF SUBJECT MATTER**
*G01D5/353*(2006.01)i

According to International Patent Classification (IPC) or to both national classification and IPC

**B. FIELDS SEARCHED**

Minimum documentation searched (classification system followed by classification symbols)
G01D5/353

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | WO 2010/021362 A1 (Watanabe Co., Ltd.), 25 February 2010 (25.02.2010), paragraphs [0019] to [0073]; fig. 1 to 20 & US 2011/0141459 A1 & EP 2330390 A1 & CA 2734708 A & CN 102124306 A | 1-8 |
| Y | JP 2001-108416 A (Mitsubishi Heavy Industries, Ltd.), 20 April 2001 (20.04.2001), paragraphs [0011] to [0023]; fig. 1 to 4 (Family: none) | 1-8 |
| Y | JP 2010-54366 A (Fujikura Ltd.), 11 March 2010 (11.03.2010), paragraph [0028]; fig. 3 (Family: none) | 3-8 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 15 August, 2013 (15.08.13) | 27 August, 2013 (27.08.13) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2013/069310

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2007-139482 A  (Boeisho Gijutsu Kenkyu Honbucho), 07 June 2007 (07.06.2007), paragraph [0035] (Family: none) | 5-8 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008139171 A
- JP 2004309218 A

- WO 0210021362 A1